# EUROPEAN PATENT SPECIFICATION

(11) **EP 3 918 501 B1**
(45) Date of publication and mention of the grant of the patent: **05.06.2024**
(21) Application number: 19724361.1
(22) Date of filing: 30.04.2019
(51) Int. Cl.: G06F 21/57, G06F 21/74

(54) **METHOD AND SYSTEM FOR PERFORMING REMOTE ATTESTATION WITH A GATEWAY IN THE CONTEXT OF A TRUSTED EXECUTION ENVIRONMENT (TEE)**
VERFAHREN UND SYSTEM ZUR DURCHFÜHRUNG EINER INTEGRITÄTSÜBERPRÜFUNG MIT EINEM GATEWAY IM RAHMEN EINER VERTRAUENSWÜRDIGEN AUSFÜHRUNGSUMGEBUNG (TEE)
PROCÉDÉ ET SYSTÈME POUR EFFECTUER UNE ATTESTATION À DISTANCE AVEC UNE PASSERELLE DANS LE CONTEXTE D'UN ENVIRONNEMENT D'EXÉCUTION DE CONFIANCE (TEE)

(30) Priority: 06.03.2019 EP 19161063
(43) Date of publication of application: 08.12.2021
(73) Proprietor: NEC Corporation, Tokyo 108-8001 (JP)
(72) Inventor: KARAME, Ghassan, 69115 Heidelberg (DE); SORIENTE, Claudio, 28692 Madrid (ES)
(74) Representative: Ullrich & Naumann PartG mbB
(86) International application number: PCT/EP2019/061076
(87) International publication number: WO 2020/177879

(56) References cited:
- US-A1- 2010 031 047
- US-A1- 2018 150 411

## Description

The present invention relates to trusted execution environments (TEE), and in particular to a method and a system for performing attestation of an application running in a TEE of a remote host.

In the context of Trusted Execution Environments (TEE), remote attestation allows a verifier to collect evidence that a specific application runs untampered in a TEE of a remote host machine. For instance, in a blockchain network a full blockchain node may implement a TEE (e.g. in form of a secure enclave) that, in respect to a lightweight blockchain client's request, obtains unspent transaction output, UTXO, information and provides this information to the lightweight client. In such cases, prior to sending her request to the TEE, the lightweight blockchain client may perform an attestation with the TEE, in order to verify honest TEE execution, e.g. by verifying that a certain enclave code has been properly initialized.

Attestation is usually achieved by means of a digital signature scheme and a trusted component on the host machine. The host machine computes the "identity" of the application running in a local TEE, and signs the computed identity with a private key. The corresponding public key is certified by a trusted certification authority. The identity of the application being attested is usually computed by applying a suitable hash function to the application binary; further data related to the configuration of the host machine may also be used as additional input to the hash function. The signature over the identity is sent to the verifier, along with the certificate of the public key issued by the certification authority.

Therefore, considering the above scheme, the verifier has 1) to verify the validity of the certificate, 2) to verify the signature, and 3) to check that the identity signed by the remote host matches a reference identity of the application being attested. As such, the verifier needs to be well aware of the details of the host where the application is running and the details of the attestation scheme in place. In particular, the verifier must be aware of the signature scheme used by the host machine in order to verify its signature. Further, the verifier must be aware of the expected identity of the application being attested. This expected identity may depend on the architecture of the host machine and the attestation protocol being used. In fact, the application binary may be architecture-dependent, and also the attestation scheme being used may add other host-related information when computing the identity of the application being attested. To make the matter worse, the signature output by a host machine may not be publicly verifiable. In such scenarios, a designated attestation server may be involved to verify the signature and provide a (binary) response to the verifier. At times, the attestation server only allows registered verifiers.

As a result, given the current landscape of different TEEs and attestation mechanisms, it may not be straightforward or sometimes not even possible for a verifier to carry out a remote attestation protocol for a given application. For example, the verifier may not be able to compute the expected application identity for a given host architecture, or simply the verifier may not be registered with the attestation server involved in the protocol.

US 2018/0150411 A1 discloses a method for remote attestation of a secure state of a secure platform, such as a TEE, on a remote host by an attestation facilitation component. The method comprises identifying a property of the TEE, customizing an instantiation of the attestation facilitation component according to the identified property, verifying by the attestation facilitation component that a secure memory application is operating within the TEE and sending a quote that confirms said verification to a remote verifier.

US 2010/0031047 A1 discloses a method for attestation of a target's system properties via an intermediate attester. A verifier can make an attestation request to said intermediate attester, which in turn sends an attestation request to a target. The target tasks an attester, which is located on the same physical host as the target, to attest to the target's integrity or properties. The attestation response from the attester then gets send back via the target and the intermediate attester to the verifier.

In view of the above it is an objective of the present invention to improve and further develop a method and a system for performing remote attestation in such a way that a verifier is enabled to attest an application running in a TEE of a remote host, independently of the type of TEE or the attestation mechanism used by the remote host.

In accordance with the invention, the aforementioned object is accomplished by a method for performing remote attestation, the method comprising:
using a gateway between a verifier and a remote host, wherein the remote host includes a trusted execution environment, TEE, in which an application to be attested is running;
receiving, by the gateway, an attestation request from the verifier;
determining, by the gateway, a type of the TEE of the remote host and an expected identity of the application to be attested and selecting an attestation protocol based on the determined type of the TEE of the remote host;
compiling, by a compilation module of the gateway, the code of the application to be attested by selecting and applying a compiler from a number of different architecture-dependent compilers depending on the determined type of the TEE of the remote host;
computing, by an identity computation module of the gateway, the expected identity of the application to be attested based on the compiled code of the application and on the determined type of the TEE of the remote host; and
verifying, by the gateway, the expected identity of the application to be attested by executing the selected attestation protocol with the remote host and transmitting an attestation result to the verifier.

Furthermore, the above mentioned objective is accomplished by a system for performing remote attestation, the system comprising a gateway to be disposed between a verifier and a remote host, wherein the remote host includes a trusted execution environment, TEE, in which an application to be attested is running, wherein the gateway is configured to provide for execution of the following steps:
receiving an attestation request from the verifier;
   determining a type of the TEE of the remote host and an expected identity of the application to be attested and selecting an attestation protocol based on the determined type of the TEE of the remote host;
compiling, by a compilation module of the gateway, the code of the application to be attested by selecting and applying a compiler from a number of different architecture-dependent compilers depending on the determined type of the TEE of the remote host;
computing, by an identity computation module of the gateway, the expected identity of the application to be attested based on the compiled code of the application and on the determined type of the TEE of the remote host; and
verifying the expected identity of the application to be attested by executing the selected attestation protocol with the remote host and transmitting an attestation result to the verifier.

According to the present invention it has been recognized that the aforementioned object can be solved by introducing an attestation gateway between the verifier and the host where the TEE application is running. The attestation gateway can be configured to act as a verifier by itself or, more specifically, to perform attestation on behalf of the verifier. What is important is that the gateway mediates between the verifier and an application to be attested running in a secure environment on the remote machine. In this way, the verifier is relieved from a number of computational tasks. In particular, it is not necessary to have different attestation services running on the verifier to cater for all types of TEEs and there is no need for the verifier to be aware of any single attestation execution steps. In fact, the verifier merely has to issue an attestation request including some minimum parameters and to receive a corresponding attestation result via the TEE attestation gateway, while the attestation procedure itself is performed by the gateway.

Consequently, according to embodiments of the invention even devices with rather limited computational capabilities are enabled to perform remote attestation for a diverse set of heterogeneous devices. In this context the present invention overcomes the issue of attesting remote applications in a scenario where heterogeneous TEEs are available and applications may be deployed in any of them.

According to embodiments of the invention the attestation gateway comprises computational means to carry out any of the remote attestation protocols that may be used by the remote host.

According to embodiments of the invention the attestation gateway may comprise several modules that are configured to communicate with each other, wherein each of the modules is configured to perform a dedicated subtask of the remote attestation procedure. Specifically, the gateway may comprise four modules: a platform identification module, a compilation module, a identity computation module, and a remote attestation module. The platform identification module may probe the host machine and identify the type of TEE running on that machine. The compilation module is configured to compile the application code supplied by the verifier in accordance with the type of TEE where the application is running as detected by the platform identification module. The identity computation module computes the expected identity of the application based on the compiled application supplied by the compilation module and the type of TEE as detected by the platform identification module. Finally, the remote attestation module may hold the verifier logic for a number of remote attestation protocols, select the appropriate one based on the type of TEE that runs on the host machine, and engage in a remote attestation protocol with the host machine. As will be appreciated by those skilled in the art, alternative implementations where the allocation of subtasks of the remote attestation procedure to individual modules of the attestation gateway differs from the allocation described above, are likewise possible.

According to embodiments the host may deploy an application A within the local TEE and the identity computation module may compute an expected identity Id_{A} of the application A based on the compiled code of the application A and the type of TEE running at the host. In the context of the attestation procedure executed by the attestation gateway, the attestation gateway receives a signature from the host on an application identity Id'_{A}. The attestation gateway may be configured to verify that the expected identity Id_{A} matches Id'_{A} and forward the result of the verification to the remote verifier.

According to embodiments the attestation gateway may use a digital signature scheme in the communication with the host machine. In this context, when the host machine computes the identity of the application to be attested (for instance by applying a suitable hash function to the application binary) and signs the computed identity with a private key, the signature over the identity, along with the certificate of the corresponding public key issued by a certification authority, may be sent to the attestation gateway. The attestation gateway may then use the public key to verify the validity of the certificate, to verify the signature, and to check that the identity signed by the remote host matches an expected (reference) identity of the application to be attested.

According to embodiments in which the attestation protocol in place involves a designated attestation server, the attestation gateway, specifically the remote attestation module of the attestation gateway, may leverage an attestation proxy, in particular an attestation proxy such as the one defined by Claudio Soriente, Ghassan Karame, Wenting Li, Sergey Fedorov: "ReplicaTEE: Enabling Seamless Replication of SGX Enclaves in the Cloud", CoRR.abs/1809.05027, which is incorporated herein by reference.

According to embodiments all dedicated modules may run on the same processing system and may even be implemented on the same electronic component. Alternatively, the modules may be implemented on different entities, wherein communication and interaction between the modules may be accomplished by means of wired or wireless communication technologies.

According to embodiments the communication between the verifier and the gateway as well as the communication between the gateway and the remote host may be implemented by using open protocols.

There are several ways how to design and further develop the teaching of the present invention in an advantageous way. To this end it is to be referred to the dependent claims on the one hand and to the following explanation of preferred embodiments of the invention by way of example, illustrated by the drawing on the other hand. In connection with the explanation of the preferred embodiments of the invention by the aid of the drawing, generally preferred embodiments and further developments of the teaching will be explained. In the drawing
- Fig. 1: schematically shows a system for performing remote attestation including a TEE attestation gateway in accordance with an embodiment of the present invention, and
- Fig. 2: is a high level flow diagram schematically illustrating remote attestation execution in accordance with an embodiment of the present invention.

Remote attestation is an essential feature of any distributed application that leverages Trusted Execution Environments (TEE). Via remote attestation, a verifier obtains evidence that a reference application runs untampered within a TEE of a remote machine. A number of TEE are currently available (e.g., Intel SGX, as described by V. Costan, et al., "Intel SGX explained.", in Cryptology ePrint Archive (2016), or ARM TrustZone, as described at https://www.arm.com/products/silicon-ip-security) and different versions of a given TEE are provided by a range of vendors (e.g., Qualcomm and Trustonic offer a different version of TrustZone each).

Given such a heterogeneous landscape of TEEs, applications may be deployed in different systems, each implementing its own attestation mechanism. A verifier, therefore, must be aware of the machine hosting the application and of the attestation mechanism implemented by that host machine.

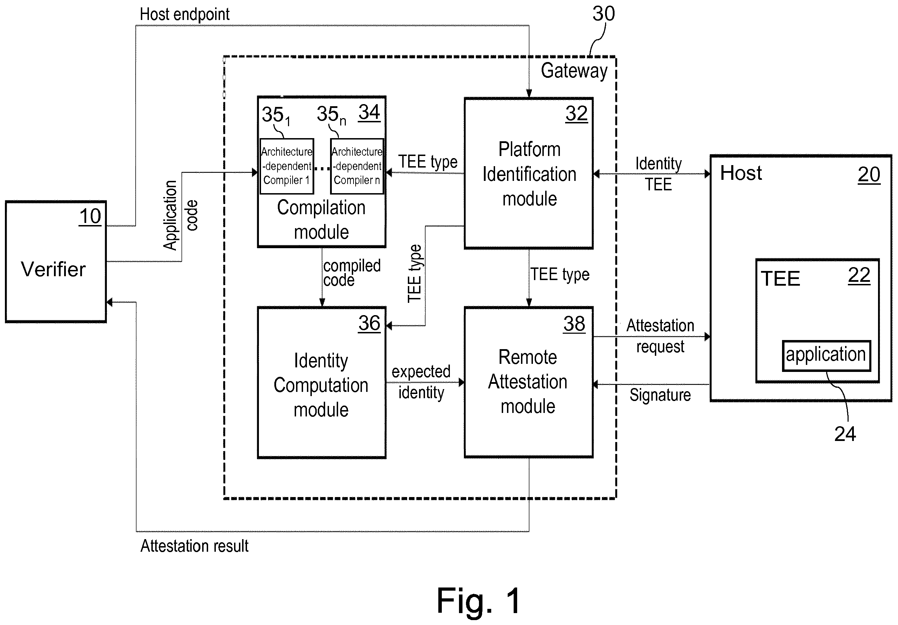

Embodiments of the present invention solve the above problem by means of an attestation gateway 30, as exemplary illustrated in Fig. 1. The gateway 30 is deployed between a verifier 10 and a remote host 20, which is a TEE-enabled platform. Specifically, the gateway 30 mediates between the verifier 10 and an application 24 to be attested, the application 24 running in a TEE 22 on the remote host 20. According to the illustrated embodiment the gateway 30 takes as input from the verifier 10 the code of the application 24 to be attested and an endpoint of the remote host machine 20 where the application 24 is deployed.

According to the illustrated embodiment the gateway 30 is composed of four modules: a platform identification module 32, a compilation module 34, an identity computation module 36, and a remote attestation module 38.

As illustrated in Fig. 1, the platform identification module 32 is configured to receive information on the endpoint of the remote host 20, as provided by the verifier 10, and to probe the host machine 20 and to identify the type of TEE 22 running on the host machine 20. This information on the type of TEE 22 is forwarded to all other modules 34, 36 and 38 of the gateway 30.

The compilation module 34 is configured to receive information on the code of the application 24, as supplied by the verifier 10, and to compile this application code in accordance with the type of TEE 22 where the application 24 is running, as detected by the platform identification module 32.

The identity ID of the application 24 may be computed by picking a hash function H, the application binary B, and computing the identity as ID = H(B). The hash function to be used depends on the attestation scheme in place. It could be SHA256 or any other function defined by the attestation scheme being used. According to embodiments, the identity may also include some platform attributes, e.g., the CPU model. In the latter case, let P be the platform parameters to be included, the identity may be computed as ID=H(P∥B) where ∥ denotes concatenation. It should be noted that which platform attributes (if any) are used to compute the identity of an application depends on the attestation scheme being used.

Based on the compiled application code supplied by the compilation module 34 and the type of TEE 22 as detected by the platform identification module 32, the identity computation module 36 is configured to compute the identity of the application 24 by applying the respective identity computation scheme in place, e.g., by computing ID = H(B) as exemplarily mentioned above. The identity of the application 24 is computed as an expected identity assuming that the information the identity computation module 36 received from the compilation module 34 (i.e. the compiled application code) and from the platform identification module 32 (i.e. the type of TEE 22) were correct.

Finally, the remote attestation module 38 is configured to hold the verifier logic for a number of remote attestation protocols, to select the right one based on the type of TEE 22 running on the host machine, 20 and to engage in a remote attestation protocol with the host machine 20 using the selected remote attestation protocol.

As the host machine 20 replies with a signature on the identity of the application 24 to be attested, the remote attestation module 38 checks the validity of the signature and that the signed identity matches the one computed by the identity computation module 36. If both checks succeed, the remote attestation module 38 provides a positive answer to the verifier 10; otherwise, it provides a negative answer to the verifier 10.

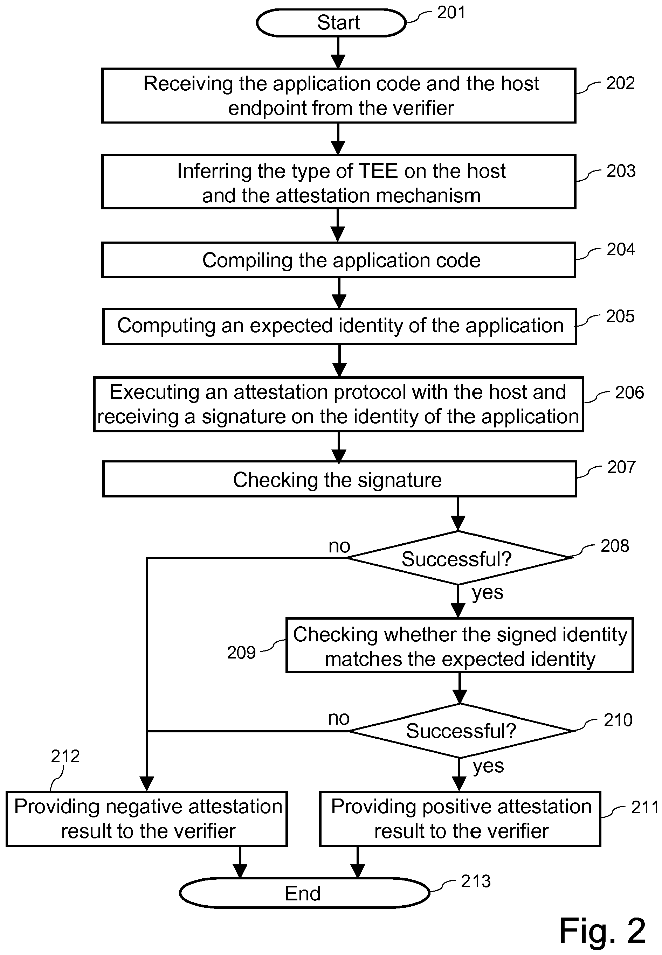

Fig. 2 illustrates a high level flow diagram showing how module executions of an attestation gateway 30 may be implemented, e.g. in the scenario of Fig. 1, to perform attestation of an application 24 running in a TEE 22 of a remote host 20 on behalf of a verifier 10. The host 20 may provide one of several types of TEE 22. For example, the host 20 may be an SGX-enabled platform or a TrustZone platform.

The flow starts at 201 and, when a remote verifier 10 issues a request for remote attestation of application 24, this request is received at the gateway 30 at 202. As a minimum requirement, the request should at least include the code of the application 24 for which the verifier 10 requests attestation, as well as information on the endpoint of the remote host 20 that runs or deploys the application 24 within the local TEE 22. For instance, the endpoint information can include an IP address of the host 20.

Considering the internal architecture of the attestation gateway 30 as illustrated in Fig. 1, the information on the endpoint of the host 20 provided by the verifier 10 is transferred to the platform identification module 32. At 203, the platform identification module 32 infers the type of TEE 22 on the host 20 (e.g. an SGX enclave, Trustzone, or the like) and the attestation mechanism in place. This may be carried out by the platform identification module 32 by contacting the host 20 and sending a specific request to the host 20 who then replies with the required information. Alternatively, the platform identification module 32 may infer the type of TEE 22 on the host 20 by detecting a specific open port on the host 20. The type of TEE 22 as detected by the platform identification module 32 is communicated internally to the other modules of the attestation gateway 30, i.e. specifically the compilation module 34, the identity computation module 36 and the remote attestation module 38.

At 204, the compilation module 34 compiles the code of the application 24 supplied by the verifier 10 for the trusted platform as identified and communicated by the platform identification module 32. To accomplish this task, according to an embodiment the compilation module 34 may be preconfigured with a number of architecture-dependent compilers 35. The compilers 35 may either reside directly on the compilation module 34, as exemplarily illustrated in Fig. 1, or the compilers 35 may be implemented on another entity to which the compilation module 34 has access to. The compilation module 34 is configured to select, from the number of architecture-dependent compiler 35, the one that matches the architecture of the host 20, specifically, the type of TEE 22 information received from the platform identification module 32. For instance, the compilation module 32 may use an x86 architecture in case the host's 20 TEE 22 is implemented in form of SGX enclaves, or an ARM architecture in case the host's 20 TEE 22 is implemented as TrustZone platforms. As will be appreciated by those skilled in the art, this list of TEE types and suitable compilers is merely illustrative and not exhaustive, and further implementations may be realized likewise. Once the task has been successfully accomplished, the compilation module 34 transmits the compiled code to the identity computation module 36.

At 205, the identity computation module 36 uses the compiled code supplied by the compilation module 34 and the TEE 22 type of the host 20 as identified by the platform identification module 32, to compute the expected identity of the application 24. The expected identity is sent to the remote attestation module 38 of the gateway 30.

At 206, the remote attestation module 38 starts, as a verifier or, more precisely, on behalf of the verifier 10, a remote attestation protocol for the application 24 running on the host 20. The remote attestation protocol to be used is selected by the remote attestation module 38 in accordance with the remote attestation protocol in use by the host 20, wherein the selection is based on the type of TEE 22 running on the host 20 as informed by the platform identification module 32.

Using the selected remote attestation protocol, the remote attestation module 38 issues a request for remote attestation of the application 24 to the host 20. In response to the attestation request, the TEE subsystem 22 on the host 20 issues a signature on the identity of the application 24 running in the host's 20 local TEE 22. Upon receipt of the signature, at 207, the remote attestation module 38 first verifies the received signature. If, at 208, the signature proofs to be valid, the remote attestation module 38 continues with the second check at 209. This second check aims at verifying that the signed identity matches the expected identity as received from the identity computation module 36. If, at 210, this check turns out to be also successful, the remote attestation module 38 provides a positive attestation result to the verifier 10 at 211. If any of the two checks turns out to be unsuccessful, either at 208 or at 210, the remote attestation module 38 provides a negative attestation result to the verifier 10 at 212 before ending the process 213.

According to another embodiment, instead of informing the verifier 10 just of the final attestation result (i.e. positive or negative), the results of both verifications performed at 207 and at 209, respectively, may be directly forwarded to the verifier 10. Optionally, the remote attestation module 38 may forward the signature received from the host 20 to the verifier 10.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for performing remote attestation, the method comprising:
using a gateway (30) between a verifier (10) and a remote host (20), wherein the remote host (20) includes a trusted execution environment, TEE (22), in which an application (24) to be attested is running;
receiving, by the gateway (30), an attestation request from the verifier (10);
determining, by the gateway (30), a type of the TEE (22) of the remote host (20) and an expected identity of the application (24) to be attested and selecting an attestation protocol based on the determined type of the TEE (22) of the remote host (20);
compiling, by a compilation module (34) of the gateway (30), the code of the application (24) to be attested by selecting and applying a compiler from a number of different architecture-dependent compilers (35) depending on the determined type of the TEE (22) of the remote host (20);
computing, by an identity computation module (36) of the gateway (30), the expected identity of the application (24) to be attested based on the compiled code of the application (24) and on the determined type of the TEE (22) of the remote host (20); and
verifying, by the gateway (30), the expected identity of the application (24) to be attested by executing the selected attestation protocol with the remote host (20) and transmitting an attestation result to the verifier (10).

2. The method according to claim 1, wherein the attestation request of the verifier (10) includes the code of the application (24) to be attested and the endpoint of the remote host (20).

3. The method according to claim 1 or 2, further comprising, by a platform identification module (32) of the gateway (30), probing the remote host (20) and identifying the type of the TEE (22) running on the remote host (20).

4. The method according to any of claims 1 to 3, further comprising, by a remote attestation module (38) of the gateway (30),
receiving a signature on the identity of the application (24) to be attested from the remote host (20) and verifying the signature, and
performing a validity check whether the signed identity received from the remote host (20) matches with the determined expected identity of the application (24).

5. The method according to claim 4, wherein the attestation result transmitted to the verifier (10) includes
transmitting a positive message to the verifier (10) confirming successful attestation in case the verification of the signature and the validity check were successful, or
transmitting a negative message to the verifier (10) indicating a failure of the attestation in case the verification of the signature and/or the validity check were unsuccessful.

6. A system for performing remote attestation, in particular for execution of a method according to any of claim 1 to 5, the system comprising a gateway (30) to be disposed between a verifier (10) and a remote host (20), wherein the remote host (20) includes a trusted execution environment, TEE (22), in which an application (24) to be attested is running, wherein the gateway (30) is configured to provide for execution of the following steps:
receiving an attestation request from the verifier (10);
determining a type of the TEE (22) of the remote host (20) and an expected identity of the application (24) to be attested and selecting an attestation protocol based on the determined type of the TEE (22) of the remote host (20);
compiling, by a compilation module (34) of the gateway (30), the code of the application (24) to be attested by selecting and applying a compiler from a number of different architecture-dependent compilers (35) depending on the determined type of the TEE (22) of the remote host (20);
computing, by an identity computation module (36) of the gateway (30), the expected identity of the application (24) to be attested based on the compiled code of the application (24) and on the determined type of the TEE (22) of the remote host (20); and
verifying the expected identity of the application (24) to be attested by executing the selected attestation protocol with the remote host (20) and transmitting an attestation result to the verifier (10).

7. The system according to claim 6, wherein the gateway (30) comprises a platform identification module (32) that is configured to probe the remote host (20) and to identify the type of the TEE (22) running on the remote host (20).

8. The system according to claim 6 or 7, wherein the gateway (30) comprises a remote attestation module (38) including a number of different verifier logics for different remote attestation protocols.

9. The system according to claim 8, wherein the remote attestation module (38) is configured
to select a verifier logic from the number of different verifier logics depending on the determined type of the TEE (22) of the remote host (20), and
to execute a remote attestation protocol with the remote host (20) corresponding to the selected verifier logic.

10. The system according to claim 8 or 9, wherein the remote attestation module (38) is further configured
to receive a signature on the identity of the application (24) to be attested from the remote host (20) and to verify the signature, and
to perform a validity check whether the signed identity received from the remote host (20) matches with the determined expected identity of the application (24).

11. The system according to claim 10, wherein the remote attestation module (38) is further configured to provide an attestation result, wherein providing the attestation result includes
transmitting a positive message to the verifier (10) confirming successful attestation in case the verification of the signature and the validity check were successful, or
transmitting a negative message to the verifier (10) indicating a failure of the attestation in case the verification of the signature and/or the validity check were unsuccessful.

## Patentansprüche

1. Verfahren zur Durchführung einer Remote-Attestierung, wobei das Verfahren Folgendes umfasst:
Verwendung eines Gateways (30) zwischen einem Verifizierer (10) und einem entfernten Host (20), wobei der entfernte Host (20) eine vertrauenswürdige Ausführungsumgebung, TEE (22), umfasst, in der eine zu attestierende Anwendung (24) läuft;
Empfangen, durch das Gateway (30), einer Attestierungsanfrage von dem Verifizierer (10);
Ermitteln, durch das Gateway (30), eines Typs des TEE (22) des entfernten Hosts (20) und einer erwarteten Identität der zu attestierenden Anwendung (24) und Auswählen eines Attestierungsprotokolls auf der Grundlage des ermittelten Typs der TEE (22) des entfernten Hosts (20);
Kompilieren des Codes der zu attestierenden Anwendung (24) durch ein Kompiliermodul (34) des Gateways (30) durch Auswählen und Anwenden eines Compilers aus einer Anzahl von verschiedenen architekturabhängigen Compilern (35) in Abhängigkeit von dem ermittelten Typ der TEE (22) des entfernten Hosts (20);
Berechnen, durch ein Identitätsberechnungsmodul (36) des Gateways (30), der erwarteten Identität der zu attestierenden Anwendung (24) basierend auf dem kompilierten Code der Anwendung (24) und auf dem ermittelten Typ der TEE (22) des entfernten Hosts (20); und
Verifizieren der erwarteten Identität der zu attestierenden Anwendung (24) durch das Gateway (30) durch Ausführen des ausgewählten Attestierungsprotokolls mit dem entfernten Host (20) und Übertragen eines Attestierungsergebnisses an den Verifizierer (10).

2. Verfahren nach Anspruch 1, wobei die Attestierungsanfrage des Verifizierers (10) den Code der zu attestierenden Anwendung (24) und den Endpunkt des entfernten Hosts (20) enthält.

3. Verfahren nach Anspruch 1 oder 2, das ferner umfasst, dass ein Plattform-Identifikationsmodul (32) des Gateways (30) den entfernten Host (20) sondiert und den Typ der TEE (22) identifiziert, die auf dem entfernten Host (20) läuft.

4. Verfahren nach einem der Ansprüche 1 bis 3, ferner umfassend, durch ein remotes Attestierungsmodul (38) des Gateways (30),
Empfangen einer Signatur der Identität der zu attestierenden Anwendung (24) von dem entfernten Host (20) und Verifizieren der Signatur, und
Durchführen einer Gültigkeitsprüfung, ob die von dem entfernten Host (20) empfangene signierte Identität mit der ermittelten erwarteten Identität der Anwendung (24) übereinstimmt.

5. Verfahren nach Anspruch 4, wobei das an den Verifizierer (10) übermittelte Attestierungsergebnis Folgendes umfasst
die Übermittlung einer positiven Nachricht an den Verifizierer (10), die eine erfolgreiche Attestierung bestätigt, falls die Überprüfung der Signatur und die Gültigkeitsprüfung erfolgreich waren, oder
die Übermittlung einer negativen Nachricht an den Verifizierer (10), die ein Scheitern der Attestierung anzeigt, falls die Prüfung der Unterschrift und/oder die Gültigkeitsprüfung nicht erfolgreich waren.

6. System zur Durchführung einer Remote-Attestierung, insbesondere zur Ausführung eines Verfahrens nach einem der Ansprüche 1 bis 5, wobei das System ein Gateway (30) umfasst, das zwischen einem Attestierung (10) und einem entfernten Host (20) angeordnet ist, wobei der entfernte Host (20) eine vertrauenswürdige Ausführungsumgebung, TEE (22), umfasst, in der eine zu attestierende Anwendung (24) läuft, wobei das Gateway (30) so konfiguriert ist, dass es für die Ausführung der folgenden Schritte sorgt:
Empfangen einer Attestierungsanfrage von dem Verifizierer (10);
Ermitteln eines Typs des TEE (22) des entfernten Hosts (20) und einer erwarteten Identität der zu attestierenden Anwendung (24) und Auswählen eines Attestierungsprotokolls auf der Grundlage des ermittelten Typs der TEE (22) des entfernten Hosts (20);
Kompilieren des Codes der zu attestierenden Anwendung (24) durch ein Kompiliermodul (34) des Gateways (30) durch Auswählen und Anwenden eines Compilers aus einer Anzahl von verschiedenen architekturabhängigen Compilern (35) in Abhängigkeit von dem ermittelten Typ der TEE (22) des entfernten Hosts (20);
Berechnen, durch ein Identitätsberechnungsmodul (36) des Gateways (30), der erwarteten Identität der zu attestierenden Anwendung (24) basierend auf dem kompilierten Code der Anwendung (24) und auf dem ermittelten Typ der TEE (22) des entfernten Hosts (20); und
Verifizieren der erwarteten Identität der zu attestierenden Anwendung (24) durch Ausführen des ausgewählten Attestierungsprotokolls mit dem entfernten Host (20) und Übertragen eines Attestierungsergebnisses an den Verifizierer (10).

7. System nach Anspruch 6, wobei das Gateway (30) ein Plattform-Identifizierungsmodul (32) umfasst, das so konfiguriert ist, dass es den entfernten Host (20) prüft und den Typ der auf dem entfernten Host (20) laufenden TEE (22) identifiziert.

8. System nach Anspruch 6 oder 7, wobei das Gateway (30) ein remotes Attestierungsmodul (38) umfasst, das eine Anzahl unterschiedlicher Verifizierungslogiken für unterschiedliche remote Attestierungsprotokolle enthält.

9. System nach Anspruch 8, wobei das remote Attestierungsmodul (38) konfiguriert ist
eine Verifizierungslogik aus der Anzahl verschiedener Verifizierungslogiken in Abhängigkeit von dem ermittelten Typ der TEE (22) des entfernten Hosts (20) auszuwählen, und
ein entferntes Attestierungsprotokol mit dem entfernten Host (20) auszuführen, das der ausgewählten Verifizierungslogik entspricht.

10. System nach Anspruch 8 oder 9, wobei das remote Attestierungsmodul (38) ferner konfiguriert ist
eine Signatur über die Identität der zu attestierenden Anwendung (24) von dem entfernten Host (20) zu empfangen und die Signatur zu verifizieren, und
eine Gültigkeitsprüfung durchzuführen, ob die von dem entfernten Host (20) empfangene signierte Identität mit der ermittelten erwarteten Identität der Anwendung (24) übereinstimmt.

11. System nach Anspruch 10, wobei das remote Attestierungsmodul (38) ferner so konfiguriert ist, dass es ein Attestierungsergebnis bereitstellt, wobei die Bereitstellung des Attestierungsergebnisses Folgendes umfasst
Übertragen einer positiven Nachricht an den Verifizierer (10), die eine erfolgreiche Beglaubigung bestätigt, falls die Überprüfung der Signatur und die Gültigkeitsprüfung erfolgreich waren, oder
Übertragen einer negativen Nachricht an den Verifizierer (10), die ein Scheitern der Attestierung anzeigt, falls die Verifizierung der Signatur und/oder die Gültigkeitsprüfung nicht erfolgreich waren.

## Revendications

1. Procédé pour réaliser une attestation à distance, le procédé comprenant :
l'utilisation d'une passerelle (30) entre un vérificateur (10) et un hôte distant (20), dans lequel l'hôte distant (20) comporte un environnement d'exécution de confiance, TEE (22), dans lequel une application (24) devant être attestée tourne ;
la réception, par la passerelle (30), d'une demande d'attestation à partir du vérificateur (10) ;
la détermination, par la passerelle (30), d'un type du TEE (22) de l'hôte distant (20) et d'une identité attendue de l'application (24) devant être attestée et la sélection d'un protocole d'attestation sur la base du type déterminé du TEE (22) de l'hôte distant (20) ;
la compilation, par un module de compilation (34) de la passerelle (30), du code de l'application (24) devant être attestée en sélectionnant et appliquant un compilateur à partir d'un nombre de différents compilateurs dépendant de l'architecture (35) en fonction du type déterminé du TEE (22) de l'hôte distant (20) ;
le calcul, par un module de calcul d'identité (36) de la passerelle (30), de l'identité attendue de l'application (24) devant être attestée sur la base du code compilé de l'application (24) et du type déterminé du TEE (22) de l'hôte distant (20) ; et
la vérification, par la passerelle (30), de l'identité attendue de l'application (24) devant être attestée en exécutant le protocole d'attestation sélectionné avec l'hôte distant (20) et la transmission d'un résultat d'attestation au vérificateur (10).

2. Procédé selon la revendication 1, dans lequel la demande d'attestation du vérificateur (10) comporte le code de l'application (24) devant être attestée et le point d'extrémité de l'hôte distant (20).

3. Procédé selon la revendication 1 ou 2, comprenant en outre, par un module d'identification de plateforme (32) de la passerelle (30), l'évaluation de l'hôte distant (20) et l'identification du type du TEE (22) tournant sur l'hôte distant (20).

4. Procédé selon l'une quelconque des revendications 1 à 3, comprenant en outre, par un module d'attestation à distance (38) de la passerelle (30),
la réception d'une signature sur l'identité de l'application (24) devant être attestée à partir de l'hôte distant (20) et la vérification de la signature, et
la réalisation d'un contrôle de validité portant sur le fait que l'identité signée reçue à partir de l'hôte distant (20) coïncide avec l'identité attendue déterminée de l'application (24).

5. Procédé selon la revendication 4, dans lequel le résultat d'attestation transmis au vérificateur (10) comporte
la transmission d'un message positif au vérificateur (10) confirmant une attestation réussie dans le cas où la vérification de la signature et le contrôle de validité ont réussi, ou
la transmission d'un message négatif au vérificateur (10) indiquant un échec de l'attestation dans le cas où la vérification de la signature et/ou le contrôle de validité n'ont pas réussi.

6. Système pour réaliser une attestation à distance, en particulier pour une exécution d'un procédé selon l'une quelconque des revendications 1 à 5, le système comprenant une passerelle (30) devant être disposée entre un vérificateur (10) et un hôte distant (20), dans lequel l'hôte distant (20) comporte un environnement d'exécution de confiance, TEE (22), dans lequel une application (24) devant être attestée tourne, dans lequel la passerelle (30) est configurée pour assurer une exécution des étapes suivantes :
la réception d'une demande d'attestation à partir du vérificateur (10) ;
la détermination d'un type du TEE (22) de l'hôte distant (20) et d'une identité attendue de l'application (24) devant être attestée et la sélection d'un protocole d'attestation sur la base du type déterminé du TEE (22) de l'hôte distant (20) ;
la compilation, par un module de compilation (34) de la passerelle (30), du code de l'application (24) devant être attestée en sélectionnant et appliquant un compilateur à partir d'un nombre de différents compilateurs dépendant de l'architecture (35) en fonction du type déterminé du TEE (22) de l'hôte distant (20) ;
le calcul, par un module de calcul d'identité (36) de la passerelle (30), de l'identité attendue de l'application (24) devant être attestée sur la base du code compilé de l'application (24) et du type déterminé du TEE (22) de l'hôte distant (20) ; et
la vérification de l'identité attendue de l'application (24) devant être attestée en exécutant le protocole d'attestation sélectionné avec l'hôte distant (20) et la transmission d'un résultat d'attestation au vérificateur (10).

7. Système selon la revendication 6, dans lequel la passerelle (30) comprend un module d'identification de plateforme (32) qui est configuré pour évaluer l'hôte distant (20) et pour identifier le type du TEE (22) tournant sur l'hôte distant (20).

8. Système selon la revendication 6 ou 7, dans lequel la passerelle (30) comprend un module d'attestation à distance (38) comportant un nombre de différentes logiques de vérificateur pour des protocoles d'attestation à distance différents.

9. Système selon la revendication 8, dans lequel le module d'attestation à distance (38) est configuré
pour sélectionner une logique de vérificateur à partir du nombre de différentes logiques de vérificateur en fonction du type déterminé du TEE (22) de l'hôte distant (20), et
pour exécuter un protocole d'attestation à distance avec l'hôte distant (20) correspondant à la logique de vérificateur sélectionnée.

10. Système selon la revendication 8 ou 9, dans lequel le module d'attestation à distance (38) est en outre configuré
pour recevoir une signature sur l'identité de l'application (24) devant être attestée à partir de l'hôte distant (20) et pour vérifier la signature, et
pour réaliser un contrôle de validité portant sur le fait que l'identité signée reçue à partir de l'hôte distant (20) coïncide avec l'identité attendue déterminée de l'application (24).

11. Système selon la revendication 10, dans lequel le module d'attestation à distance (38) est en outre configuré pour fournir un résultat d'attestation, dans lequel la fourniture du résultat d'attestation comporte
la transmission d'un message positif au vérificateur (10) confirmant une attestation réussie dans le cas où la vérification de la signature et le contrôle de validité ont réussi, ou
la transmission d'un message négatif au vérificateur (10) indiquant un échec de l'attestation dans le cas où la vérification de la signature et/ou le contrôle de validité n'ont pas réussi.
